# EUROPÄISCHE PATENTSCHRIFT

(11) **EP 3 781 852 B1**
(45) Veröffentlichungstag und Bekanntmachung des Hinweises auf die Patenterteilung: **02.11.2022**
(21) Anmeldenummer: 19727075.4
(22) Anmeldetag: 17.04.2019
(51) Int. Cl.: F16K 7/06, F16K 31/04, F16K 7/04

(54) **QUETSCHVORRICHTUNG**
PINCHING DEVICE
DISPOSITIF DE SERRAGE

(30) Priorität: 19.04.2018 CH 5052018
(43) Veröffentlichungstag der Anmeldung: 24.02.2021
(73) Patentinhaber: DrM, Dr. Müller AG, 8708 Männedorf (CH)
(72) Erfinder: MÜLLER, Patrick, 8706 Meilen (CH); WETTER, Kevin, 9053 Teufen (CH)
(74) Vertreter: Prins Intellectual Property AG
(86) Internationale Anmeldenummer: PCT/IB2019/053163
(87) Internationale Veröffentlichungsnummer: WO 2019/202523

(56) Entgegenhaltungen:
- EP-A1- 2 543 914
- WO-A2-02/36998
- CN-U- 205 001 564
- DE-A1- 19 907 109
- DE-C- 955 750

## Beschreibung

### Technisches Gebiet

Die Erfindung betrifft eine Quetschvorrichtung zum Regeln von Durchflüssen in elastischen Schlauchleitungen.

### Stand der Technik

Quetschvorrichtungen, auch Quetschventile genannt, zum Regeln von Durchflüssen in elastischen Schlauchleitungen sind bekannt. Dabei wird ein elastischer Schlauch an einer Quetschvorrichtung angebracht und der Durchfluss im Schlauch über den von der Quetschvorrichtung ausgeübten Kompressionsdruck gesteuert. Quetschventile dieser Art werden häufig manuell betätigt und finden in Labors, insbesondere in biologischen und chemischen Labors Anwendung. Manuell betriebene Quetschventile bestehen im Normalfall aus zwei Platten, die mittels Schraubstocksystem aufeinandergedrückt werden. Dazwischen befindet sich die Schlauchleitung, die entsprechend gequetscht wird.

Andere Quetschventile besitzen eine Magnetspule als Antrieb, die einen Bolzen verwendet, um den Schlauch zu quetschen. Aufgrund der begrenzten mechanischen Kraft, die durch ein solches Magnetfeld erzeugt werden kann, sind solche Quetschventile nur für kleine Schlauchdurchmesser einsetzbar. Insbesondere haben sie den Nachteil, dass die Antriebskraft nicht ausreicht, um druckbeaufschlagte Schlauchleitungen zu quetschen. Solche Quetschventile sind beispielsweise in US 7896310, US 7104275, US 8622365 und EP 2668424 beschrieben.

DE 955750C beschreibt einen Fasshahn mit Schlauchauslauf und einem Quetschverschluss, dessen durch ein festes Widerlager und einen schwenkbaren Teil gebildete Klemmorgane zwischen parallelen Wänden eines an der Unterseite des Hahnkörpers befestigten U-förmigen Lagerbockes angeordnet sind.

CN 205001564U offenbart ein flexibles Rohrleitungsventil, wobei das flexible Rohrleitungsventil mit einem Ventilkörper versehen ist und der Ventilkörper mit einem Durchgangsloch zum Einsetzen eines flexiblen Rohrs und zur Aufnahme einer rotierenden Druckkomponente versehen ist.

WO 02/36998A2 beschreibt ein Quetschventil zum Abquetschen eines Rohres, wobei das Ventil einen linearen Aktuator, ein bewegliches Rückteil, gegen das Druck ausgeübt werden kann, und einen Zeiger umfasst, der drehbar mit dem linearen Aktuator verbunden ist.

Mit Motor und Getriebe angetriebene Quetschventile sind ebenfalls bekannt. Sie können höhere Kräfte erzeugen. Wie bei den manuellen Quetschventilen werden zwei gerade Bolzen aufeinander gedrückt, um den Schlauch zu quetschen. Beispielsweise ist in DE 19907109A1 ein Gasventil für Heizgas mit einem verstellbaren Strömungsquerschnitt beschrieben, wobei der Strömungsquerschnitt durch einen mittels eines elektrischen Signals steuerbaren Stellantrieb einstellbar ist. Und EP 2543914A1 beschreibt eine Vorrichtung zum radialen Zusammendrücken einer elastischen Leitung für ein strömendes Medium mit einem quer zum Einlegekanal verschiebbaren Druckstück und mit einem auf das Druckstück zu dessen Verschiebung wirkenden Aktor, welcher eine elektromotorische Antriebseinheit mit einer Abtriebswelle aufweist.

Nachteilig bei den bekannten Systemen ist, dass die Kanten des Schlauches sehr hohen Kräften ausgesetzt sind, während die Mitte weniger stark gepresst wird. Das kann zu unvollständigem Verschluss oder aufgrund von frühzeitigem Verschleiss zu kurzen Betriebszeiten des Schlauches führen.

Die meisten bekannten Schlauchquetschventile sind Kombinationen aus Schlauch und Ventilkörper. Die Ventilkörper werden normalerweise durch Flanschverbindungen in die Schlauchleitung eingebaut. Dies hat den Nachteil, dass die Quetschventile an einer vorgegebenen Stelle eingebaut sind und nicht verschoben werden können.

### Beschreibung der Erfindung

Der vorliegenden Erfindung ist nun die Aufgabe gestellt, eine Quetschvorrichtung zu schaffen, welche die Betriebszeiten der Schlauchleitungen erhöht, welche das Regeln von Durchflüssen bei druckbeaufschlagten Schlauchleitungen ermöglicht, und welche an beliebiger Stelle an einer Schlauchleitung angebracht und wieder entfernt werden kann.

Diese Aufgabe wird durch eine Quetschvorrichtung zum Regeln von Durchflüssen in elastischen Schlauchleitungen umfassend zwei Räder gelöst, wobei das erste Rad als Exzenterrad ausgebildet ist und exzentrisch an einem Antriebsschaft befestigt ist, und das zweite Rad in vorgegebener Position relativ zum Exzenterrad fest angeordnet ist, wobei die Position des zweiten Rades verstellbar ist. Das Exzenterrad ist über den Antriebsschaft um die exzentrische Achse des Exzenterrades in Richtung des zweiten Rades drehbar, um einen zwischen den zwei Rädern positionierten Schlauch zu quetschen.

Die Erfindung hat den Vorteil, dass die elastische Schlauchleitung durch die beiden Räder mit möglichst kleinem Widerstand zusammengepresst werden kann. Dies hat den Vorteil, dass das Schlauchmaterial weniger stark belastet wird und somit längere Betriebszeiten erreicht werden, was besonders bei einer hohen Wechselbeanspruchung betreffend Kosten und Sicherheit eine zentrale Rolle spielt. Ein weiterer Vorteil besteht darin, dass die Quetschvorrichtung an beliebiger Stelle an der Schlauchleitung angebracht werden kann, wo der Schlauch gequetscht werden soll, ohne die Schlauchleitung zu unterbrechen. Somit kann sie unabhängig von der Schlauchleitung vertrieben werden und ist für sterile Anwendungen geeignet.

Unter elastischer Schlauchleitung wird ein Schlauch verstanden, welcher aus einem elastischen Material besteht und welcher quetschbar ist. Beispiele für solche Materialien sind elastische Kunststoffe wie beispielsweise Silikon, Naturkautschuk, Ethylen-Propylen-Dien-Kautschuk (EPDM) oder Fluor-Polymer-Kautschuk (FPM). Druckbeaufschlagte Schlauchleitungen können mit einem rundgewobenen Textil laminiert werden, um höhere Kräfte zu absorbieren.

Erfindungsgemäß ist der Rand des Exzenterrades konvex ausgebildet und der Rand des zweiten Rades konkav. Erfindungsgemäß ist die konvexe Form des Exzenterrades passend auf die konkave Form des zweiten Rades abgestimmt. D.h. die beiden Radränder sind komplementär zueinander, vorzugsweise mit einem kreisbogenförmigen Profil. In einer bevorzugten Ausführungsform ist die konkave Form des zweiten Rades kreisbogenförmig und die konvexe Form des Exzenterrades gegen Mitte der Radachse hin zugespitzt mit abgerundetem Ende. Die konvexe und konkave Form der beiden Räder ermöglicht einen gleichmässigen Druck auf das Schlauchmaterial, wodurch das Schlauchmaterial weniger beansprucht wird.

Erfindungsgemäß umfasst das Exzenterrad einen Ring aus gleitfähigem Material, wie beispielsweise Polytetrafluorethylen (PTFE) oder Polyethylen. Dieser Ring wird auch als Gleitring bezeichnet. Der Ring bildet die konvexe Form des Exzenterrades. In einer Ausführungsform wird der Ring über zwei Scheiben axial relativ zur Radachse in Position gehalten. Die Scheiben können beispielsweise über Schrauben am Exzenterrad befestigt werden. Unter einem Exzenterrad versteht man eine auf einer Welle, d.h. einem Antriebsschaft angebrachte Radscheibe, wobei der Mittelpunkt der Welle außerhalb des Radmittelpunktes ist.

Das Exzenterrad ist über den Antriebsschaft um die exzentrische Achse des Exzenterrades in Richtung des zweiten Rades drehbar. Der Antrieb kann auf verschiedene Arten erfolgen, beispielsweise manuell, elektrisch, pneumatisch oder hydraulisch. Vorzugsweise erfolgt der Antrieb elektrisch.

Vorzugsweise umfasst die Quetschvorrichtung einen elektrischen Antrieb für das Exzenterrad. In einer bevorzugten Ausführungsform umfasst die Quetschvorrichtung eine Regelelektronik zur Steuerung des elektrischen Antriebs. Vorzugsweise ist die Regelelektronik über einen Motor und ein Untersetzungsgetriebe mit dem Antriebsschaft des Exzenterrades verbunden. Dadurch kann über ein Steuersignal der Regelelektronik das Exzenterrad in Richtung des zweiten Rades und des Schlauches gedreht werden. Der Vorteil dieser Ausführungsform liegt darin, dass durch den Antrieb über einen Motor und ein Untersetzungsgetriebe eine höhere Druckkraft auf den Schlauch ausgeübt werden kann als dies mit bekannten Quetschvorrichtungen der Fall ist. Dies ermöglicht das Regeln von Durchflüssen auch in druckbeaufschlagten Schlauchleitungen. Unter druckbeaufschlagter Schlauchleitung wird ein Schlauch verstanden, auf welchen Druck gegeben wird und der Durchfluss über Druck erfolgt.

Erfindungsgemäß umfasst die Quetschvorrichtung eine Basisplatte, an welcher das zweite Rad befestigt ist. Vorzugsweise ist das zweite Rad über eine Buchse und eine Stiftschraube an der Basisplatte befestigt. In einer weiteren Ausführungsform umfasst das zweite Rad mindestens zwei Distanzbuchsen, über welche die Position des zweiten Rades auf der Basisplatte verstellbar ist. Die gewünschte Position kann je nach Schlauchdicke eingestellt werden.

In einer Ausführungsform ist der Motor, beziehungsweise das Untersetzungsgetriebe des Motors an der Basisplatte befestigt, vorzugsweise angeschraubt. Das Exzenterrad ist vorzugsweise über den Antriebsschaft am Untersetzungsgetriebe befestigt.

Erfindungsgemäß umfasst die Quetschvorrichtung mindestens eine Führungsschiene mit einer Aussparung für einen Schlauch. Dadurch kann der Schlauch in die gewünschte Position sowie in die gewünschte Richtung bezüglich der zwei Räder gebracht werden. Vorzugsweise umfasst die Quetschvorrichtung zwei Führungsschienen, wobei die beiden Räder zwischen den beiden Führungsschienen angeordnet sind.

Zusätzlich umfasst die vorliegende Erfindung ein Verfahren zum Regeln der erfindungsgemässen Quetschvorrichtung, bei welchem der Stromverbrauch des Motors als Steuergrösse für die Regelelektronik verwendet wird. Je mehr der Schlauch gepresst wird, desto mehr steigt der Stromverbrauch des Motors an. Ist der Schlauch vollständig gepresst, wird ein Grenzwert des Stromverbrauches erreicht. Dadurch wird ein Steuersignal an die Regelelektronik geleitet und die Stromzufuhr an den Motor unterbrochen. Die Quetschvorrichtung und der Schlauch bleiben geschlossen. Um die Quetschvorrichtung und den Schlauch wieder zu öffnen und den Durchfluss im Schlauch zu vergrössern, wird die Stromzufuhr wieder eingeschalten. Die Regelelektronik steuert den Elektromotor in die entgegengesetzte Richtung. Somit wird das Exzenterrad in umgekehrter Richtung, d.h. in Gegenuhrzeigersinn, gedreht und der Querschnitt des Schlauches vergrössert sich, bis der volle Querschnitt erreicht ist.

Die erfindungsgemässe Quetschvorrichtung ist besonders geeignet für die Anwendung in der pharmazeutischen Industrie oder in der Medizinaltechnik, insbesondere in biologischen oder chemischen Labors.

Weitere Vorteile der Erfindung folgen aus der nachfolgenden Beschreibung, in welcher die Erfindung anhand eines in den schematischen Zeichnungen dargestellten Ausführungsbeispiels näher erläutert wird.

### Kurze Beschreibung der Figuren

Es zeigen:
- Fig. 1: die Quetschvorrichtung in einer Sicht von vorne,
- Fig. 2: die Quetschvorrichtung in einer Sicht von oben gemäss II, wie in Figur 1 bezeichnet,
- Fig. 3: die Quetschvorrichtung in perspektivischer Darstellung von vorne.

In den Figuren sind für dieselben Elemente jeweils dieselben Bezugszeichen verwendet worden und erstmalige Erklärungen betreffen alle Figuren, wenn nicht ausdrücklich anders erwähnt.

### Ausführungsbeispiele der Erfindung

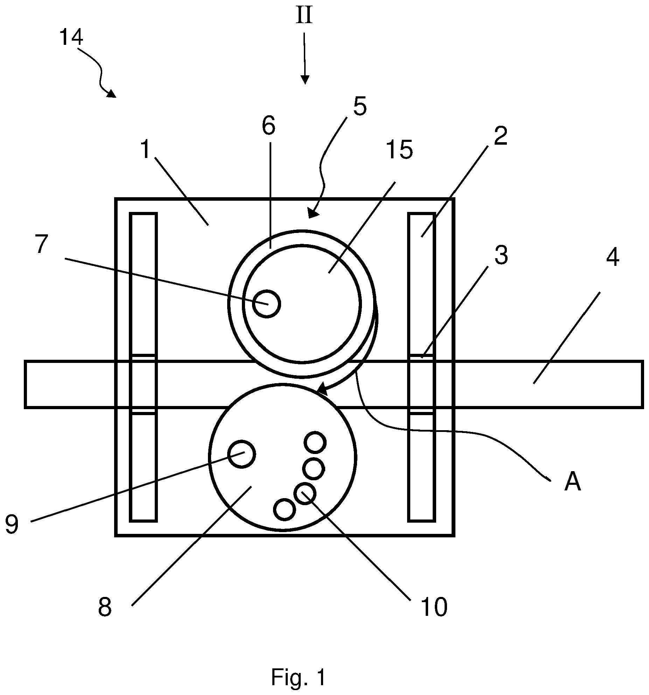

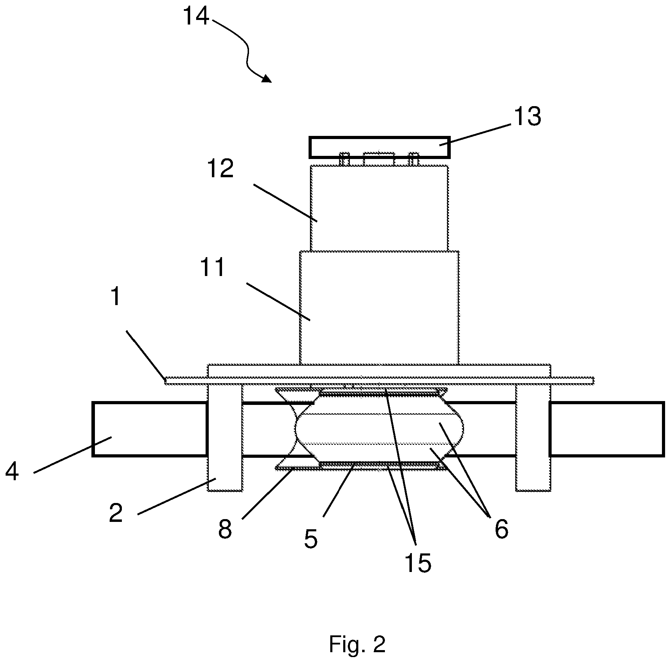

In der Figur 1 ist die Quetschvorrichtung 14 mit einem Exzenterrad 5 und einem zweiten Rad 8 dargestellt. Das Exzenterrad 5 ist über einen Antriebsschaft 7 mit einem Untersetzungsgetriebe 11 (in Figur 2 dargestellt) verbunden und ist, zum Quetschen des Schlauches 4, über den Antriebsschaft 7 um die exzentrische Achse in Richtung des zweiten Rades 8 in Richtung des Pfeiles A drehbar. Das zweite Rad ist dabei in seiner Postition zum Exzenterrad 5 fest angeordnet. Zum Öffnen des Schlauches 4 ist das Exzenterrad 5 in die Gegenrichtung des Pfeiles A drehbar. Um das Exzenterrad 5 befindet sich ein Gleitring 6, welcher über zwei Scheiben 15 (nur eine sichtbar) axial relativ zur Radachse in Position gehalten wird. Wird das Exzenterrad 5 im Uhrzeigersinn gedreht, drückt der Gleitring 6 auf den Schlauch 4 und gegen das zweite Rad 8, wodurch der Schlauch 4 zwischen den beiden Rädern gequetscht wird. Das zweite Rad 8 ist über eine Buchse 9 und eine Stiftschraube (nicht dargestellt) an der Basisplatte 1 befestigt. Die Buchse 9 ist exzentrisch angeordnet. Das zweite Rad 8 ist um die exzentrische Achse der Buchse 9 in seiner Position relativ zum ersten Rad verstellbar. In diesem Ausführungsbeispiel umfasst das zweite Rad 8 vier Distanzbuchsen 10, über welche die Position des zweiten Rades 8 verstellbar ist und je nach Schlauchdurchmesser angepasst und in gewünschter Position fixiert werden kann. Zusätzlich ist die Basisplatte 1 mit zwei parallel zueinander angeordneten und an der Basisplatte 1 befestigten Führungsschienen 2 dargestellt. Die Führungsschienen 2 mit den Aussparungen 3 dienen dazu, einen Schlauch 4 in Position zu führen.

Figur 2 zeigt die Quetschvorrichtung 14 wie in Figur 1 beschrieben mit dem Untersetzungsgetriebe 11, dem Motor 12 und der Regelelektronik 13. Um den Durchfluss in der Schlauchleitung 4 zu schliessen, kann ein Steuersignal auf die Regelelektronik 13 gegeben werden, welche den Motor 12 einschaltet. Dieser treibt über das Untersetzungsgetriebe 11 und den Antriebsschaft 7 das Exzenterrad 5 an und drückt über den konvexen Ring 6 auf die Mittelachse der Schlauchleitung 4. Somit kann die Mittelachse des Schlauches zum zweiten Rad 8 hin verformt werden. Die konvexe Form des Radrandes des Exzenterrades 5 hat ein Profil, welches gegen Mitte der Radachse hin zugespitzt ist und ein abgerundetes Ende aufweist. Der Schlauch 4 drückt gegen die konkave Form des zweiten Rades 8, bis der Schlauchquerschnitt geschlossen ist. Die konkave Form des Radrandes des zweiten Rades 8 hat ein kreisbogenförmiges Profil. Eine bei diesem Vorgang zentrale Rolle spielt dabei der Gleitring 6, der aus einem gleitfähigen Material besteht und über zwei Scheiben 15 in Position gehalten wird, damit er nicht vom Exzenterrad 5 abrutscht. Damit lässt sich der beim Quetschvorgang aufbauende axiale Reibwiderstand stark verringern. Ist der Gleitring 6 in Kontakt mit dem zu quetschenden Schlauch 4, bleibt der Gleitring 6 relativ zum Schlauch 4 stehen, so dass zwischen Schlauch 4 und Gleitring 6 im Wesentlichen keine Reibung entsteht. Dreht sich das Exzenterrad 5 weiter, bewegt sich das Exzenterrad 5 relativ zum Gleitring 6, während der Gleitring stehen bleibt. Wenn der Schlauch 4 komplett gepresst ist, steigt der Stromverbrauch des Motors 12 so stark an, dass dieser als Steuergrösse für die Regelelektronik verwendet werden kann, um die Stromzufuhr an den Motor 12 zu unterbrechen. Erreicht der Stromverbrauch des Motors 12 einen Grenzwert, so wird die Stromzufuhr unterbrochen. Der Schlauch 4 bleibt somit geschlossen.

Um den Durchfluss zu öffnen, wird das Steuersignal an die Regelelektronik wieder unterbrochen. Damit steuert die Regelelektronik den Elektromotor und den Antriebsschaft in die entgegengesetzte Richtung. Somit dreht das Exzenterrad im Gegenuhrzeigersinn und der Querschnitt des Schlauches vergrössert sich, bis der volle Querschnitt wieder erreicht ist. Der Motor wird über Zeit oder einer Endlagemeldung ausgeschaltet.

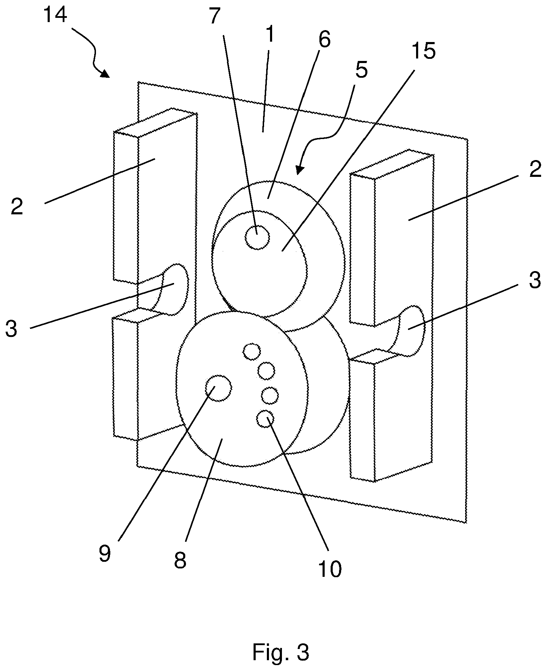

Figur 3 zeigt die Quetschvorrichtung 14 mit dem Exzenterrad 5 und dem zweiten Rad 8 wie in Figur 1 beschrieben. Der Schlauch ist in Figur 3 nicht dargestellt. Durch die Drehung des Antriebsschafts 7 im Uhrzeigersinn kann die konvexe Form des Gleitrings 6 des Exzenterrades 5 in Richtung der konkaven Form des zweiten Rades 8 mit der Buchse 9 und den weiteren Buchsen 10 bewegt werden und einen Schlauch quetschen. Die zwei auf der Basisplatte 1 parallel angeordneten Führungsschienen 2 mit den Aussparungen 3 für das Führen eines Schlauches sind ebenfalls dargestellt.

### Bezugszeichenliste

- 1: Basisplatte
- 2: Führungsschiene
- 3: Aussparung
- 4: Schlauch, Schlauchleitung
- 5: erstes Rad, Exzenterrad
- 6: Ring, Gleitring
- 7: Antriebsschaft
- 8: zweites Rad
- 9: Buchse
- 10: Distanzbuchse
- 11: Untersetzungsgetriebe
- 12: Motor
- 13: Regelelektronik
- 14: Quetschvorrichtung
- 15: Scheibe

## Patentansprüche

1. Quetschvorrichtung (14) zum Regeln von Durchflüssen in elastischen Schlauchleitungen, wobei die Quetschvorrichtung zwei Räder (5, 8) und eine Basisplatte (1) umfasst, wobei das erste Rad als Exzenterrad (5) ausgebildet ist und exzentrisch an einem Antriebsschaft (7) befestigt ist, und das zweite Rad (8) in vorgegebener Position relativ zum Exzenterrad (5) fest angeordnet und an der Basisplatte (1) befestigt ist, wobei die Position des zweiten Rades (8) verstellbar ist, wobei das Exzenterrad (5) über den Antriebsschaft (7) um die exzentrische Achse des Exzenterrades (5) in Richtung des zweiten Rades (8) drehbar ist, um einen zwischen den zwei Rädern (5, 8) positionierbaren Schlauch (4) zu quetschen, wobei die Quetschvorrichtung (14) mindestens eine Führungsschiene (2) mit einer Aussparung (3) für einen Schlauch (4) umfasst, welche dazu dient, die Quetschvorrichtung (14) an beliebiger Stelle des Schlauches (4) sowie in die gewünschte Richtung bezüglich der zwei Räder (5, 8) anzubringen **dadurch gekennzeichnet, dass** ein Radrand des zweiten Rades (8) konkav ausgebildet ist und ein Radrand des Exzenterrades (5) konvex ausgebildet ist und einen Ring (6) aus gleitfähigem Material umfasst, welcher die konvexe Form bildet, derart dass die Mittelachse des Schlauches (4) zwischen der konkaven Form des zweiten Rades (8) und der konvexen Form des Exzenterrades (5) quetschbar ist, wobei die beiden Radränder komplementär zueinander sind.

2. Quetschvorrichtung (14) nach Anspruch 1, **dadurch gekennzeichnet, dass** die konvexe Form des Radrandes des Exzenterrades (5) ein Profil aufweist, welches gegen die Mitte der Radachse hin zugespitzt ist und ein abgerundetes Ende aufweist, und dass die konkave Form des Radrandes des zweiten Rades (8) ein kreisbogenförmiges Profil aufweist.

3. Quetschvorrichtung (14) nach einem der Ansprüche 1-2, **dadurch gekennzeichnet, dass** die Vorrichtung einen elektrischen Antrieb für den Antrieb des Exzenterrades (5) über den Antriebsschaft (7) umfasst.

4. Quetschvorrichtung (14) nach Anspruch 3, **dadurch gekennzeichnet, dass** die Quetschvorrichtung (14) zur Steuerung des elektrischen Antriebs eine Regelelektronik (13) umfasst, welche über einen Motor (12) und ein Untersetzungsgetriebe (11) mit dem Antriebsschaft (7) verbunden ist.

5. Quetschvorrichtung (14) nach einem der Ansprüche 1-4, **dadurch gekennzeichnet, dass** das zweite Rad (8) mindestens zwei Distanzbuchsen (10) umfasst, über welche die Position des zweiten Rades (8) auf der Basisplatte (1) verstellbar ist.

6. Quetschvorrichtung (14) nach einem der Ansprüche 1-5, **dadurch gekennzeichnet, dass** die Quetschvorrichtung (14) zwei Führungsschienen (2) umfasst, wobei die beiden Räder (5, 8) zwischen den beiden Führungsschienen (2) angeordnet sind.

7. Verfahren zum Regeln der Vorrichtung nach einem der Ansprüche 1-6, **dadurch gekennzeichnet, dass** der Stromverbrauch des Motors als Steuergrösse für die Regelelektronik verwendet wird.

## Claims

1. A pinching device (14) for regulating flows in elastic hose lines, the pinching device comprising two wheels (5, 8) and a base plate (1), the first wheel being constructed as an eccentric wheel (5) and being fastened eccentrically on a driveshaft (7), and the second wheel (8) being fixedly arranged in a predetermined position relative to the eccentric wheel (5) and fastened on the base plate (1), the position of the second wheel (8) being adjustable, the eccentric wheel (5) being rotatable by means of the driveshaft (7) about the eccentric axis of the eccentric wheel (5) in the direction of the second wheel (8), in order to pinch a hose (4), which can be positioned between the two wheels (5, 8), the pinching device (14) comprising at least one guide rail (2) with a recess (3) for a hose (4), which is used to fit the pinching device (14) at a desired position on the hose (4) and in the desired direction with respect to the two wheels (5, 8) **characterized in that** a wheel edge of the second wheel (8) is of concave construction and a wheel edge of the eccentric wheel (5) is of convex construction and comprises a ring (6) made from a slidable material, which forms the convex shape in such a manner that the central axis of the hose (4) can be pinched between the concave shape of the second wheel (8) and the convex shape of the eccentric wheel (5), wherein the two wheel edges are complementary to one another.

2. The pinching device (14) according to Claim 1, **characterized in that** the convex shape of the wheel edge of the eccentric wheel (5) has a profile, which is pointed towards the centre of the wheel axis and has a rounded end, and **in that** the concave shape of the wheel edge of the second wheel (8) has a circular-arc-shaped profile.

3. The pinching device (14) according to one of Claims 1 - 2, **characterized in that** the device comprises an electric drive for the drive of the eccentric wheel (5) by means of the driveshaft (7).

4. The pinching device (14) according to Claim 3, **characterized in that** the pinching device (14) comprises control electronics (13) for controlling the electric drive, which are connected via a motor (12) and a reduction gear (11) to the driveshaft (7).

5. The pinching device (14) according to one of Claims 1 - 4, **characterized in that** the second wheel (8) comprises at least two spacer bushes (10), by means of which the position of the second wheel (8) on the base plate (1) can be adjusted.

6. The pinching device (14) according to one of Claims 1 - 5, **characterized in that** the pinching device (14) comprises two guide rails (2), wherein the two wheels (5, 8) are arranged between the two guide rails (2).

7. A method for controlling the device according to one of Claims 1 - 6, **characterized in that** the power consumption of the motor is used as a controlled variable for the control electronics.

## Revendications

1. Dispositif de pincement (14), destiné à régler des débits dans des conduits flexibles élastiques, le dispositif de pincement comportant deux roues (5, 8) et une plaque d'embase (1), la première roue étant conçue sous la forme d'une roue excentrique (5) et étant fixée de manière excentrique sur une tige d'entraînement (7) et la deuxième roue (8) étant fixement placée dans une position prédéfinie par rapport à la roue excentrique (5) et étant fixée sur la plaque d'embase (1), la position de la deuxième roue (8) étant ajustable, la roue excentrique (5) étant rotative par l'intermédiaire de la tige d'entraînement (7) autour de l'axe excentrique de la roue excentrique (5) en direction de la deuxième roue (8), pour pincer un flexible (4) positionnable entre les deux roues (5, 8), le dispositif de pincement (14) comprenant au moins un rail de guidage (2) pourvu d'une encoche (3) pour un flexible (4), qui sert à monter le dispositif de pincement (14) en un endroit quelconque du flexible (4) et dans la direction souhaitée par rapport aux deux roues (5, 8), **caractérisé en ce qu'**un bord de roue de la deuxième roue (8) est conçu de forme concave et un bord de roue de la roue excentrique (5) est conçu de forme convexe et comprend une bague (6) en une matière coulissante, laquelle créé la forme convexe, de telle sorte que l'axe médian du flexible (4) puisse être pincé entre la forme concave de la deuxième roue (8) et la forme convexe de la roue excentrique (5), les deux bords de roues étant complémentaire l'un de l'autre.

2. Dispositif de pincement (14) selon la revendication 1, **caractérisé en ce que** la forme convexe du bord de roue de la roue excentrique (5) comporte un profil qui est effilé vers le centre de l'axe de la roue et comporte une extrémité arrondie et **en ce que** la forme concave du bord de roue de la deuxième roue (8) comporte un profil en arc de cercle.

3. Dispositif de pincement (14) selon l'une quelconque des revendications 1 à 2, **caractérisé en ce que** le dispositif comprend un entraînement électrique, destiné à entraîner la roue excentrique (5) par l'intermédiaire de la tige d'entraînement (7).

4. Dispositif de pincement (14) selon la revendication 3, **caractérisé en ce que** pour commander l'entraînement électrique, le dispositif de pincement (14) comporte une électronique de réglage (13) qui par l'intermédiaire d'un moteur (12) et d'un motoréducteur (11) est reliée avec la tige d'entraînement (7).

5. Dispositif de pincement (14) selon l'une quelconque des revendications 1 à 4, **caractérisé en ce que** la deuxième roue (8) comprend au moins deux douilles entretoises (10), par l'intermédiaire desquelles la position de la deuxième roue (8) sur la plaque d'embase (1) est ajustable.

6. Dispositif de pincement (14) selon l'une quelconque des revendications 1 à 5, **caractérisé en ce que** le dispositif de pincement (14) comprend deux rails de guidage (2), les deux roues (5, 8) étant placées entre les deux rails de guidage (2).

7. Procédé destiné à régler le dispositif selon l'une quelconque des revendications 1 à 6, **caractérisé en ce que** la consommation électrique du moteur est utilisée comme grandeur de commande pour l'électronique de réglage.
